# EUROPEAN PATENT APPLICATION

(11) **EP 3 957 202 A1**
(43) Date of publication of application: **23.02.2022**
(21) Application number: 20927866.2
(22) Date of filing: 24.03.2020
(51) Int. Cl.: A41D 13/11

(54) **METHOD FOR PRODUCING ANTI-VIRAL FIBER PRODUCT, AND ANTI-VIRAL MASK OBTAINED USING SAME**

(71) Applicant: Shigadry With Earth CO., LTD., Shiga 522-0222 (JP)
(72) Inventor: TANAKA Hidehiko, Hikone City, Shiga 5220222 (JP)
(74) Representative: Gille Hrabal Partnerschaftsgesellschaft mbB Patentanwälte
(86) International application number: PCT/JP2020/013102
(87) International publication number: WO 2021/192057

(57) **Abstract**

Problem to be solved

A fiber product and a mask containing the product have antiviral effects and persistent activity even after being washed many times.

Solution to the problem

A method of manufacturing an antiviral fiber product includes impregnating a virus-inactivating agent into a cellulose-based fiber at a temperature of 120°C to 200°C and a pressure of 0.0098 MPa to 0.59 MPa. The virus-inactivating agent contains: an aqueous organic acid solution containing 40 wt% to 50 wt% of organic acid partially lactonizing when dissolved in water; zinc oxide nanoparticles dispersed in the aqueous organic acid solution; and zinc salt of organic acid generated by dispersion of the zinc oxide nanoparticles into the aqueous organic acid solution.

## Description

### TECHNICAL FIELD

The present invention relates to a method of manufacturing an antiviral fiber product, and more particularly, relates to a method of manufacturing an antiviral fiber product obtainable by impregnating a virus-inactivating agent into cellulosic fibers.

### BACKGROUND ART

Fiber products used in hospitals and nursing facilities, such as futons (comforters), sheets, duvet covers, patient gowns, and doctor's coats are gradually contaminated with bacteria and viruses during long-term use even if a disinfection treatment is performed at every washing.

These clothes need washing every day to ensure their cleanliness and safety, but such washing involves enormous cost for patient transfer and repositioning and for bedmaking.

Meanwhile, many of the masks that general consumers wear for infection prevention do not have antiviral effects or virus-impermeable effects; these masks can allow some viruses to enter the users' mouths and noses.

The lack of virus prevention of these masks is often compensated by spraying an antiviral agent; however, spraying the agent every time the masks are used takes time and cost.

Under such circumstances, attention is being paid to a technique of previously impregnating an antiviral agent into fibers. In this technique, however, the agent can be easily eliminated during washing, making the masks unable to be used repeatedly.

The inventor of the present invention has found that an agent that contains 5000 ppm to 10000 ppm concentration of zinc salt of organic acid is capable of inactivating avian influenza viruses and has suggested using this agent as a virus-inactivating agent (Patent Literature 1). The inventor has also suggested the technique of making clothes to which this inactivating agent has been applied (Patent Literature 2).

### Citation List

### Patent Literature

PTL 1: Japanese Patent No. 4980337
PTL 2: Utility Model Registration No. 3187328

### SUMMARY OF THE INVENTION

### Technical Problem

During the 2020 COVID-19 pandemic, masks were sold out and difficult to get. Therefore, there is a growing desire for highly reusable masks with persistent antiviral effects. Furthermore, because there were many cases of infection of workers in the clinical environment, it is desired to easily apply persistent antiviral properties not only to protective clothing but also to clothing for the workers in the clinical environment.

The inventor of the present invention, who has further studied the above-mentioned aqueous solution of zinc salt of organic acid, has found a method of impregnating this aqueous solution into fibers in such a manner as to make the fibers highly wash-resistant and remain active even after being washed many times. Thus, the inventor has achieved the present invention.

An object of the present invention is to provide a method of manufacturing a fiber product that has persistent antiviral effects even after being washed many times.

### Solution to Problem

To solve the above-mentioned problems, a method of manufacturing an antiviral fiber product according to the present invention is a method of manufacturing an antiviral fiber product including impregnating a virus-inactivating agent into a cellulose-based fiber at a temperature of 120°C to 200°C and a pressure of 0.0098 MPa to 0.59 MPa. The virus-inactivating agent contains: an aqueous organic acid solution containing 40 wt% to 50 wt% of organic acid partially lactonizing when dissolved in water; zinc oxide nanoparticles dispersed in the aqueous organic acid solution; and zinc salt of organic acid generated by dispersion of the zinc oxide nanoparticles into the aqueous organic acid solution.

Zinc oxide nanoparticles have another advantage of being easily dispersed in organic acid. Among metal ions, mercury (Hg) is said to have the highest bactericidal effects, followed by Ag, Cu, Zn, Fe, and TiO₂ in that order, and silver-based antibacterial agents are often used. However, when formed into ultra-fine particles, zinc oxide exhibits as high sterilizing and bactericidal effects as silver. The ultra-fine particles of zinc oxide is considered to have the same bactericidal mechanism as silver ions. To be more specific, it is considered that the germ cell membranes are destroyed not by the toxic and bactericidal properties of metal but by active oxygen into which some of the oxygen in the air or water are converted by these particles. When used in nanoparticle form, zinc oxide has a larger specific surface area and comes into contact with a larger surface of germs, thereby inhibiting the growth of the germs. Metal ions in powder form are unlikely to elute, thereby having persistent bactericidal effects and safety. When coming into direct contact with germs, these metal ions have as high antibacterial properties as silver. Note that the germs have a diameter of 75 nm. The germs can be inactivated by selecting zinc oxide in the form of ultra-fine particles that have a similar diameter to the germs and then dispersing the zinc oxide into an aqueous organic acid solution.

Furthermore, in the present invention, the aqueous organic acid solution contains 40 wt% to 50 wt% of organic acid that partially lactonizes when dissolved in water. In the following description, gluconic acid is used as an example of such organic acid and is explained how it works.

When gluconic acid is dissolved in water, part of the gluconic acid is converted to gluconolactone as shown in Chemical Formula 1. In this case, it is referred that gluconic acid and gluconolactone are in equilibrium. The ratio of the gluconolactone to the gluconic acid differs depending on temperature, concentration, or pH of the aqueous solution. When acidic, the solution contains a large amount of acid, so that the gluconolactone increases in percentage. Meanwhile, when the solution is alkaline, the gluconic acid is converted to salt and stabilized, so that gluconolactone decreases in percentage. Two components in equilibrium are as if two water tanks that are connected through a tube; when water is poured into the left-side tank, some of the water flows to the right-side tank through the tube to strike a balance.

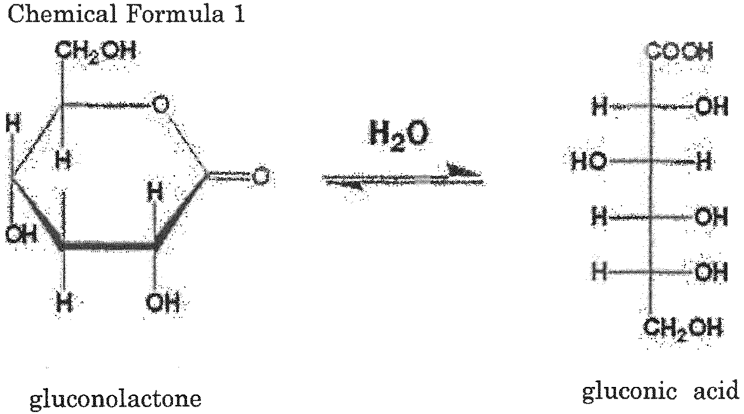

Synergistic effects produced by the concurrent use of zinc oxide nanoparticles and gluconic acid (an organic acid that partially lactonizes when dissolved in water) will now be explained by describing a case where gluconic acid comes into contact with avian influenza virus, which is a protein. As shown in Chemical Formula 2 below, any protein contains acidic and basic amino acids. When dissolved in water, the acidic amino acid, which has -COOH, is converted to negative ions (COO⁻). Meanwhile, the basic amino acid, which has -NH₂, is converted to positive ions (-NH₃⁺). When positive ions outnumber negative ions or vice versa in a protein, the protein is dissolved in water. However, when positive and negative ions are equal in number (they are at the isoelectric point), the protein, which is electrically neutral and has no charges, remains undissolved in water. At its isoelectric point, the virus becomes insoluble in water and coagulates and dies.

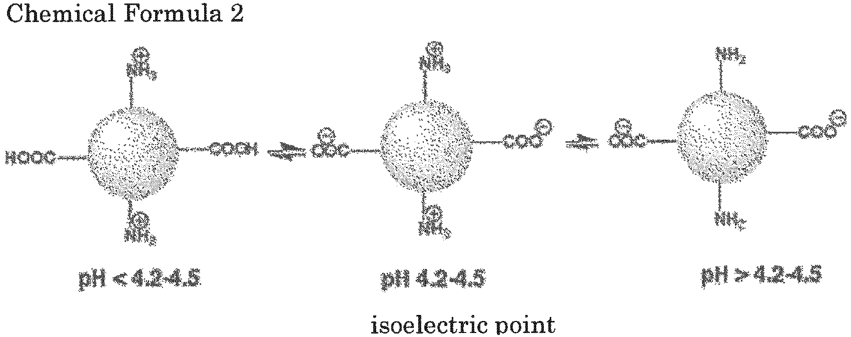

According to the present invention, zinc oxide nanoparticles react with gluconic acid (an organic acid that partially lactonizes when dissolved in water) to be converted to zinc gluconate. This zinc gluconate is considered to adjust the isoelectric point well, thereby destroying and inactivating the avian influenza virus cells.

In this case, fumaric acid, malic acid, or citric acid can be added to the aqueous gluconic acid solution in order to improve its antibacterial properties.

According to the configuration of the present invention, the virus-inactivating agent is impregnated into a cellulose-based fiber at a high temperature and a high pressure. The high temperature and high pressure accelerates the impregnation of the virus-inactivating agent containing zinc salt of organic acid into the micropores of the fiber.

Meanwhile, cellulose contains a lot of glucosidic bonded β-glucose molecules. As shown in Chemical Formula 3 below, cellulose has three OH groups (polar functional groups) per monomer. Zinc ions (Zn²⁺) are coordinated to the oxygen atoms of the cellulose OH groups, thereby being more firmly trapped in these oxygen atoms. On the other hand, the oxygen atoms of the carboxyl group (COO⁻) of the organic acid are coordinated to the hydrogen atoms of the OH groups, thereby being more firmly trapped in these hydrogen atoms. The high temperature and high pressure accelerates this action, allowing more zinc salt of organic acid to be trapped by the cellulose fiber. The zinc salt of organic acid thus coordinated and trapped by the cellulose fiber is less likely to be eliminated during normal washing, thereby maintaining high antiviral activity even after being washed many times.

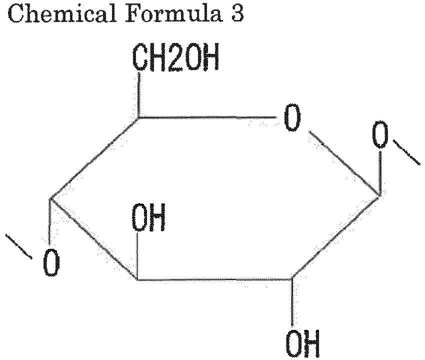

Too high temperature and pressure may increase the cost, whereas too low temperature and pressure may fail to provide sufficient effects. For this reason, the temperature is 120°C to 200°C, preferably 130°C to 180°C, and more preferably 140°C to 170°C, whereas the pressure is 0.0098 MPa to 0.59 MPa, preferably 0.15 MPa to 0.5 MPa, and more preferably 0.2 MPa to 0.4 MPa. Note that these pressure values are applied at normal pressure (about 0.1 MPa). For example, when pressure is applied at 1.5 atm, the amount of pressure referred to in the present invention is 0.5 atm (about 0.05 MPa).

The high temperature and high pressure may be applied either concurrently or sequentially. To be more specific, one approach is to apply high temperature and high pressure at the same time. An alternative approach is to apply high temperature first, and then to apply high pressure either while the temperature is being decreased or after the temperature is decreased. A further alternative approach is to apply high pressure first, and then to apply high temperature either while the pressure is being decreased or after the pressure is decreased.

For example, using a commercially available autoclave enables the concurrent application of high temperature and high pressure, thereby enabling the sterilization of fiber products. Using such an autoclave also enables a high-temperature aqueous solution (virus-inactivating agent) to be impregnated into cellulose while the solution is maintained in a liquid form. The autoclave may be replaced by a commercially available heat press machine.

The impregnation time (the time taken to apply high temperature and high pressure concurrently or the total time taken to apply high temperature and high pressure sequentially) is preferably 1 minute to 60 minutes, more preferably 5 minutes to 45 minutes, and further more preferably 10 minutes to 30 minutes. When both temperature and pressure are relatively high, the impregnation time can be further shortened.

The fiber products mentioned in the present invention include fibers (strings) themselves; clothing materials such as fabrics and towels obtained by weaving the fibers (plain weave, twill weave, sateen weave) and nonwoven clothes; and all fiber products made of these closing materials - garments, gauzes, sheets, bags, pillowcases, strings, ropes, and carpets.

Applying the impregnation process of the present invention may clog pores of fibers to reduce the breathability; however, the reduced breathability results in the improvement of antivirality and virus impermeability.

The target to which the impregnation process is applied may be any of the above-mentioned fiber products. In other words, the target for the impregnation process may be selected between final products and their materials.

The use of the fiber products is not particularly limited. The products are suitable for medical and nursing applications. In addition, the products are also applicable to households with babies, infants, pregnant women, elderly people, or students who are preparing for examinations because these people can be protected from virus infection during influenza epidemic seasons.

Furthermore, the fiber products are preferably wash-resistant. For example, a fiber product that is cloth or made of cloth preferably has a thickness of at least 0.12 mm, more preferably at least 0.15 mm, and further more preferably at least 0.18 mm.

Such fiber products include clothes made of cotton such as lawn cloth, broadcloth, fine broadcloth, sheeting cloth, double gauze cloth, and other clothes made by processing these clothes.

The drying performed after the impregnation process can be a well-known method such as air drying, moist-heat drying, or dry-heat drying. When a high-temperature and high-pressure application device with a drying function is available, the drying function may be used.

The zinc oxide nanoparticles preferably contain zinc oxide nanoparticles having a diameter of 50 nm to 70 nm.

The zinc salt of organic acid preferably contains zinc gluconate.

The virus-inactivating agent may further contain a pigment or a dye so that dyeing and the application of antiviral properties can be performed at the same time.

The zinc gluconate has a high antiviral activity when its content in the solution is 5000 ppm to 10000 ppm. In terms of antiviral activity, the zinc gluconate content is preferably 6000 ppm to 9000 ppm and more preferably 6500 ppm to 8500 ppm. On this account, it is preferable that the zinc gluconate should be added to the fiber so that its concentration can be set at the above-mentioned value ranges. Furthermore, the concentration of the zinc gluconate contained in the virus-inactivating agent can be 5000 ppm to 10000 ppm, preferably 6000 ppm to 9000 ppm, and more preferably 6500 ppm to 8500 ppm as mentioned above.

The virus-inactivating agent may further contain a binder.

Before the impregnation process, an additional process of impregnating a binder into fiber may be provided.

Using a binder enables the zinc salt of organic acid to be firmly fixed in the cellulosic fiber, thereby improving wash resistance.

Such a binder can either be made to come into contact with the zinc salt of organic acid after the adhesion between the binder and the cellulosic fiber is improved, or be made to come into contact with the cellulosic fiber after the unity between the binder and the zinc salt of organic acid is improved.

Examples of the binder include general-purpose resins such as water-based acrylic binders, glyoxal resins, and butadiene resin latexes. The virus-inactivating agent may further contain a softener, a moisturizer, or other additives.

When the binder is impregnated first, the binder is dissolved in an appropriate solvent (e.g., water), and the resulting solution can be coated or sprayed onto a target, or alternatively, the target may be soaked in the solution. The impregnation may be performed either at normal temperature and normal pressure or at high temperature and high pressure.

Furthermore, 1,3-dimethyl-2-imidazolidine can be added to the virus-inactivating agent to improve the solubility of the zinc salt of organic acid in water. Note that 1,3-dimethyl-2-imidazolidine is non-poisonous.

When the virus-inactivating agent is impregnated into a cloth, the content of the agent is preferably 5 g/m² to 13 g/m², more preferably 7 g/m² to 13 g/m², and further more preferably 8 g/m² to 12 g/m² in terms of zinc oxide nanoparticles.

### Advantageous Effects of Invention

The method of manufacturing an antiviral fiber product according to the present invention enables zinc salt of organic acid to have long-term antiviral effects. This, for example, allows repeated use of masks and linen in the clinical environment.

The antiviral fiber product according to the present invention can prevent the development of foul odors due to propagation of various germs, thereby providing long-lasting deodorizing effects.

Furthermore, zinc oxide nanoparticles have effects of reflecting sunlight, thereby cutting off heat and UV from the sun. Such effects can be applied to clothes, curtains, and other fabric articles.

### BRIEF DESCRIPTION OF DRAWINGS

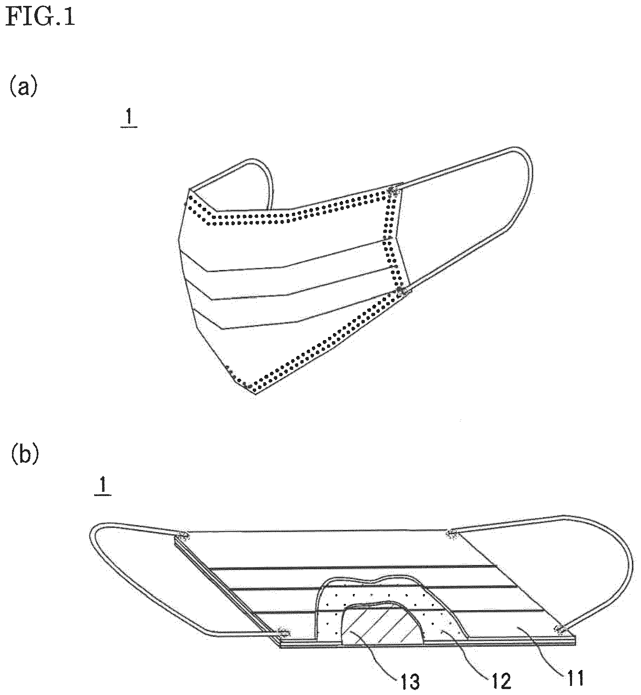

FIGS. 1(a) and 1(b) show a mask in which the fiber product according to the present invention is contained; FIG. 1(a) is an external view of the mask, and FIG. 1(b) is a partially cutaway view of the mask body having a laminated structure.

### DESCRIPTION OF EMBODIMENT

The method of manufacturing a fiber product according to the present invention uses a virus-inactivating agent in which zinc oxide nanoparticles are dispersed into an aqueous organic acid solution in such a manner that the solution contains 5000 ppm to 10000 ppm concentration of zinc salt of organic acid. The aqueous organic acid solution contains 40 wt% to 50 wt% of organic acid that partially lactonizes when dissolved in water.

Examples of such organic acids include gluconic acid, acetic acid, citric acid, tartaric acid, malic acid, and lactic acid. Among these acids, gluconic acid is preferable.

The virus-inactivating agent can be manufactured, for example, as follows. Zinc oxide nanoparticles having a diameter of 50 nm to 70 nm are dispersed and stirred into an aqueous gluconic acid solution containing 40 wt% to 50 wt% of gluconic acid at room temperature so that the resulting zinc gluconate has a concentration of 5000 ppm to 10000 ppm. Throughout the dispersion, the solution temperature is prevented from exceeding room temperature. It has been confirmed that while the zinc oxide nanoparticles are being dispersed and stirred in an aqueous gluconic acid solution, the solution generates heat and undergoes gelation if generating too much heat.

The virus-inactivating agent thus obtained is impregnated into a cellulose-based fiber at a temperature of 120°C to 200°C and a pressure of 0.0098 MPa to 0.59 MPa.

The high temperature peak and the high pressure peak can either coincide with each other or differ from each other.

The cellulose-based fiber is not limited to cellulosic natural fibers (e.g., cotton, hemp, flax) and regenerated fibers (e.g., rayon), but can further contain other types of fibers (e.g., synthetic fiber). For example, the cellulose-based fiber can be a cloth made of a blend of cellulose and other materials or a cloth made of different types of fibers. The mass ratio of cellulosic natural or regenerated fiber to the cellulose-based fiber is preferably at least 30%, more preferably at least 50%, and further more preferably at least 70%.

### Preparation of the Virus-Inactivating Agent

Six different samples of a virus-inactivating agent were prepared as follows, which contained different concentrations of zinc gluconate: 30,000 ppm; 10,000 ppm; 7,500 ppm; 5,000 ppm; 3,750 ppm; and 2,000 ppm. Zinc oxide nanoparticles having a diameter of 50 nm to 70 nm were dispersed and stirred into an aqueous solution at room temperature while the solution temperature was prevented from exceeding room temperature. The aqueous solution contained 50% of organic acid (gluconic acid in the embodiment) that partially lactonizes when dissolved in water.

The zinc oxide in the form of ultra-fine particles is considered to be uniformly dispersed and dissolved in water with the assistance of the organic acid (gluconic acid).

The process of dispersing the zinc oxide nanoparticles into the aqueous organic acid solution is preferably performed while avoiding a solution temperature rise.

Next, 0.5 ml of each sample of the zinc gluconate solution (sterile distilled water was used for comparison) and 0.5 ml of avian influenza virus (A/whistling swan/Shimane/499/83(H5N3)10^{7.5}EID₅₀/0.1 ml) were mixed in a vortex mixer and reacted for 10 minutes at room temperature (20°C). The mixture solution of each sample and the virus was diluted ten times with sterile phosphate-buffered saline (PBS) containing an antibiotic. Then, 0.1 ml of the diluted mixture solution was inoculated into the chorioallantoic cavity of each of three 10-day-old chicken embryos. After the embryonated eggs were incubated for two days at 37°C, a hemagglutination test was conducted to check whether the virus grew in the chorioallantoic cavities. Then, the virus infectivity titers were calculated by the Reed and Munch method. The results are shown in Table 1 below.

**Table 1**

| | | Virus Infectivity Titer (log EID₅₀/0.1 ml) |
|---|---|---|
| Zinc gluconate | 30,000 ppm | 5.75 |
| Zinc gluconate | 10,000 ppm | 2.5 |
| Zinc gluconate | 7,500 ppm | 2.25 |
| Zinc gluconate | 5,000 ppm | 3.5 |
| Zinc gluconate | 3,750 ppm | 4.5 |
| Zinc gluconate | 2,000 ppm | 6.25 |
| Sterile distilled water | | 7.75 |

As apparent from Table 1, the virus infectivity titer was the lowest (2.25) when the gluconic acid concentration was 7,500 ppm. The reason for the lowest value is unknown.

### Impregnation into Fibers

A virus-inactivating agent containing 7500 ppm of zinc gluconate was prepared in the same manner as above. An experiment was conducted in which the virus-inactivating agent was impregnated into cellulose fiber (20-count yarn) and cellulose cloth (No. 11 canvas), both of which were commercially available.

### Example 1

First, 1 kg of cellulose fiber and 1 kg of cellulose cloth were put in an autoclave available from Ikeda Scientific Co., Ltd. After this, 2 liter of virus-inactivating agent was added. Then, the virus-inactivating agent was impregnated into the cellulose fiber for ten minutes at 134°C and 0.23 MPa.

Afterwards, blow drying was conducted at room temperature, thereby obtaining the cellulose fiber and cellulose cloth of Example 1.

### Example 2

The cellulose fiber and cellulose cloth of Example 2 were prepared in the same manner as in Example 1 except that the temperature and pressure were set at 150°C and 0.39 MPa, respectively.

### Example 3

The cellulose fiber and cellulose cloth of Example 3 were prepared in the same manner as in Example 1 except that the temperature and pressure were set at 120°C and 0.10 MPa, respectively, and that the impregnation time was set at 20 minutes.

### Comparative Example 1

The cellulose fiber and cellulose cloth of Comparative Example 1 were prepared in the same manner as in Example 1 except that the temperature and pressure were set at 110°C and 0.044 MPa, respectively, and that the impregnation time was set at 30 minutes.

### Comparative Example 2

The cellulose fiber and cellulose cloth of Comparative Example 2 were prepared, both of which underwent no treatment.

### Washing

Each of the cellulose fibers and each of the cellulose clothes of Examples 1 to 3 and Comparative Examples 1 and 2 were divided in two amounts, and each half was washed 350 times without detergent in a commercially-available household washing machine.

The cellulose fibers and cellulose clothes of Examples 1 to 3 and Comparative Examples 1 and 2, both unwashed and washed, were prepared. The same experiment as above was conducted after 0.5 g of each of the fiber products was put in a container containing 1.0 ml of the avian influenza virus solution so as to calculate the virus infectivity titers. In the Table 2 shown below, ○ (good) indicates that log EID₅₀/0.1 ml is 3.5 or below, × (poor) indicates that log EID₅₀/0.1 ml is 5 or greater, and Δ (fair) indicates values between them.

**[Table 2]**

| | Impregnation Process | | Antiviral Activity | |
|---|---|---|---|---|
| | Temperature (°C) | Pressure (MPa) | Unwashed | Washed |
| Example 1 | 134 | 0.23 | ○ | ○ |
| Example 2 | 150 | 0.39 | ○ | ○ |
| Example 3 | 120 | 0.10 | ○ | ○ |
| Comparative Example 1 | 110 | 0.044 | ○ | × |
| Comparative Example 2 | - | - | × | × |

It has been found that the cellulose fiber and cellulose cloth of Comparative Example 2, which had not undergone the impregnation treatment with the virus-inactivating agent, had no antiviral effect. It has also been found that the cellulose fibers and cellulose clothes of examples 1 to 3 had good antiviral activity both before and after they were washed, indicating excellent antiviral properties even after being washed. On the other hand, although the cellulose fiber and cellulose cloth of Comparative Example 1 had the same antiviral properties as those of Examples 1 to 3 before being washed, the properties did not remain after being washed.

### Application to Masks

FIGS. 1(a) and 1(b) show an antiviral mask in which the fiber product according to the present invention is contained; FIG. 1(a) is an external view of the mask, and FIG. 1(b) is a partially cutaway view of the mask body having a laminated structure. As shown in FIG. 1(b), the mask body is formed of a plurality (three in this drawing) of layers of cloth.

In the drawing, an inner layer 13 is a cloth that will touch the user's mouth. Therefore, this layer should preferably be made of a material which is pleasant to touch. A middle layer 12 will be out of direct contact with both the outside air and the user's mouth. Therefore, applying the present invention to the cloth of this layer can provide long-term antiviral activity. An outer layer 11 will be exposed to the outside air. Applying the present invention to the cloth of this layer can prevent the user's hand, after touching the mask, from being contaminated with viruses.

Furthermore, the function of blocking pollen and fine particles such as PM 2.5 may be provided to any of these layers.

The cloth used for the mask is preferably resistant to at least 350 times of washing. The fiber product of the present invention, which is durable to at least 350 times of washing, is preferably made of string and fabric suitable for the properties of the product.

Furthermore, the present invention is applicable to clothes used for medical and nursing workers, and for hospital and nursing-facility users to prevent hospital-acquired infections.

In the above-mentioned Examples, gluconic acid was used as an organic acid; however, the present invention is not limited to gluconic acid.

It should be understood that the above Examples have been described as examples of the implementation of the present invention. The scope of the present invention is shown not by the above description but by the scope of the claims, including all modifications and equivalents.

### INDUSTRIAL APPLICABILITY

The antiviral fiber product according to the present invention maintains bactericidal and antiviral effects even after being washed many times, thereby providing high industrial applicability.

### REFERENCE MARKS IN THE DRAWINGS

- 1: antiviral mask
- 11: outer layer
- 12: middle layer
- 13: inner layer

## Claims

1. A method of manufacturing an antiviral fiber product comprising:
impregnating a virus-inactivating agent into a cellulose-based fiber at a temperature of 120°C to 200°C and a pressure of 0.0098 MPa to 0.59 MPa, the virus-inactivating agent comprising:
an aqueous organic acid solution containing 40 wt% to 50 wt% of organic acid partially lactonizing when dissolved in water;
zinc oxide nanoparticles dispersed in the aqueous organic acid solution; and
zinc salt of organic acid generated by dispersion of the zinc oxide nanoparticles into the aqueous organic acid solution.

2. The method according to claim 1, wherein the zinc oxide nanoparticles comprise zinc oxide nanoparticles having a diameter of 50 nm to 70 nm.

3. The method according to claim 1 or 2, wherein the zinc salt of organic acid comprises zinc gluconate.

4. The method according to claim 3, wherein the virus-inactivating agent comprises 5000 ppm to 10000 ppm of the zinc gluconate.

5. An antiviral mask comprising a fiber product manufactured by the method according to any one of claims 1 to 4.
